# DEMANDE DE BREVET EUROPEEN

(11) **EP 1 205 867 A1**
(43) Date de publication de la demande: **15.05.2002**
(21) Numéro de dépôt: 01402861.7
(22) Date de dépôt: 07.11.2001
(51) Int. Cl.: G06F 17/60

(54) **Système informatisé de suivi d'assurance qualité d'une entreprise**

(30) Priorité: 07.11.2000 FR 0014266
(71) Demandeur: FRANCE TELECOM exploitant public, 75015 Paris (FR)
(72) Inventeur: Bellabouvier, Jean-Pierre, 90150 Frais (FR)
(74) Mandataire: Jacobson, Claude

(57) **Abrégé**

Système de suivi d'assurance qualité d'une entreprise, caractérisé en ce qu'il comporte un dispositif d'enregistrement de données relatives à une entreprise permettant d'établir des liens entre lesdites données, comprenant un dispositif (18) de stockage d'informations et de mise en commun de celles-ci, des postes d'utilisateurs (10,12,14) pouvant être mis en communication avec le dispositif de stockage (18) au moyen de réseaux informatiques (16) d'entreprise, des moyens de détermination d'écarts entre lesdites données et des normes en vigueur et de moyens de déclenchement d'actions correctives en réponse à l'existence et à la possibilité de non-conformités.

## Description

La présente invention est relative au suivi d'assurance qualité dans une entreprise et se rapporte plus particulièrement à l'enregistrement et au suivi des informations nécessaires à la mise en place et au fonctionnement d'une telle démarche.

Il s'agit d'un moyen d'aide à la décision offrant à ses utilisateurs les fonctionnalités nécessaires de saisie, de consultation, d'impression et autres.

Une telle application est destinée à fonctionner en réseau entre différentes entités.

Ceci permet essentiellement une mise en commun des informations, la constitution d'une vision globale d'une situation et forme un dispositif de communication en temps réel entre différents acteurs.

L'invention a pour objet un système de suivi d'assurance qualité d'une entreprise, caractérisé en ce qu'il comporte un dispositif d'enregistrement de données relatives à une entreprise permettant d'établir des liens entre lesdites données, comprenant un dispositif de stockage d'informations et de mise en commun de celles-ci, des postes d'utilisateurs pouvant être mis en communication avec le dispositif de stockage au moyen de réseaux informatiques, des moyens de détermination d'écarts entre lesdites données et des normes en vigueur et des moyens de déclenchement d'actions correctives en réponse à l'existence et à la possibilité de non-conformités.

Suivant d'autres caractéristiques de l'invention :
- le dispositif d'enregistrement de données comprend une unité centrale de traitement comportant une zone de paramétrage reliée à une interface d'administrateur ayant un premier niveau d'habilitation, ladite zone de paramétrage contenant une première zone de mémoire de données caractéristiques d'une entreprise et une seconde zone de mémoire de données caractéristiques des activités sous assurance qualité de ladite entreprise, ladite unité centrale comprenant en outre une zone accessible aux utilisateurs reliée à des interfaces ayant au moins un second niveau d'habilitation inférieur au premier niveau d'habilitation, d'accès pour les utilisateurs et contenant au moins une zone de gestion des non-conformités reliée à la zone de stockage de données caractéristiques de l'entreprise, une zone de gestion des actions correctives/préventives reliée à la zone de stockage de données caractéristiques des activités sous assurance qualité, ladite zone de gestion des non-conformités étant reliée à la zone de gestion des actions correctives/préventives par des premiers liens ;
- la zone de stockage de données caractéristiques de l'entreprise comprend des régions de mémoire pour le stockage d'informations relatives aux unités, aux sites, aux départements, aux équipes, aux responsables et aux utilisateurs de l'entreprise respectivement ;
- la zone de stockage de données caractéristiques des activités sous assurance qualité comprend des régions de mémoire pour des informations concernant respectivement les processus, les lots, les origines et les causes des non-conformités ;
- la zone de gestion des non-conformités comporte des régions de mise en oeuvre d'opérations de saisie, de consultation, de modification, de relance, de suivi et d'impression d'informations ;
- la zone de gestion des actions correctives/préventives, comprend des régions respectives de saisie, de consultation, de modification, de suivi et d'impression ;
- la zone accessible aux utilisateurs comporte en outre une zone de gestion des audits reliée par des liens à la zone de gestion des actions correctives/préventives ;
- ladite zone de gestion des audits comprend des régions respectives de mise en oeuvre d'opérations de saisie d'audits, de saisie de fiches de constat, de consultation, de modification, de suivi et d'impression ;
- le dispositif de stockage d'informations est une unité centrale de traitement et les postes d'utilisateurs sont des ordinateurs de type PC dont au moins certains sont reliés à l'unité centrale par des liaisons informatiques d'entreprise ;
- au moins certains desdits postes utilisateurs sont reliés à l'unité centrale par une liaison Intranet ;
- les postes d'utilisateurs sont connectés chacun par une liaison Intranet à une interface Intranet reliée à son tour à une zone de stockage des données du système informatique de gestion de la boucle d'amélioration de la qualité se trouvant dans l'unité centrale de traitement ;
- l'interface Intranet comprend une interface utilisateurs qui contient des pages HTML et qui est reliée à son tour à des premiers scripts d'élaboration de pages liées aux données, lesdits premiers scripts étant à leur tour reliés à des seconds scripts de gestion des connexions aux données ;
- la structure d'une entreprise est initialisée à l'aide de tables correspondant à différents niveaux de hiérarchie dans l'entreprise.

L'invention sera mieux comprise à la lecture de la description qui va suivre, donnée uniquement à titre d'exemple et faite en se référant aux dessins annexés, sur lesquels :
- la Fig.1 est une schéma synoptique du système de suivi d'assurance qualité suivant l'invention ;
- la Fig.2 est un organigramme du fonctionnement du système de suivi d'assurance qualité suivant l'invention ;
- la Fig.3 est un organigramme de la saisie et de la consultation d'une non-conformité ;
- la Fig.4 représente une structure d'entreprise initialisée à l'aide de tables successives ;
- la Fig.5 est un schéma représentant une saisie d'une non-conformité d'une entreprise ;
- la Fig.6 est une schéma représentant un système de liens entre les dysfonctionnements et les décisions techniques ; et
- la Fig.7 est un schéma d'une interface Intranet mettant en oeuvre le système de suivi d'assurance qualité suivant l'invention.

Le système informatisé de gestion d'une boucle d'amélioration de la qualité est organisé en fonction de quatre concepts d'une démarche d'amélioration de la qualité :
- les écarts par rapport aux normes en vigueur provoquent l'apparition de non-conformités ;
- l'existence et la possibilité de non-conformités conduisent au déclenchement d'actions correctives ou préventives ;
- la bonne maîtrise des écarts et des actions correctives ou préventives permet d'obtenir des rapports d'audits favorables ;
- les évolutions dans l'organisation qui peuvent avoir un impact sur le niveau de qualité sont prises en charge et suivies dans des plans assurance qualité.

Un logiciel fournit un ensemble de fonctionnalités permettant de gérer complètement chacun de ces quatre domaines.

L'application comporte deux parties principales :
- un dispositif d'enregistrement de données permettant d'établir des liens entre ces données.
   II s'agit d'un dispositif de stockage des informations et de leur mise en commun.
   Cette base de données unique et centralisée, est installée sur un serveur accessible aux postes des utilisateurs par les fonctionnalités courantes des réseaux informatiques d'entreprises, qui ne seront pas développées ici ;
- un dispositif d'interface avec les utilisateurs.

Cette interface fournit à l'utilisateur les écrans nécessaires au pilotage de l'application.

Elle se présente essentiellement sous forme de menus à sélectionner et de zones à saisir intégrant une assistance en fonction du contexte.

Elle comporte les programmes nécessaires à la mise à disposition des fonctionnalités avancées de l'application.

Sans nécessité de posséder des connaissances particulières en informatique, on peut ainsi alimenter le système par les informations à :
- enregistrer,
- consulter et/ou modifier les données,
- effectuer des recherches à partir de critères,
- produire des impressions y compris sous forme de tableaux statistiques, etc...

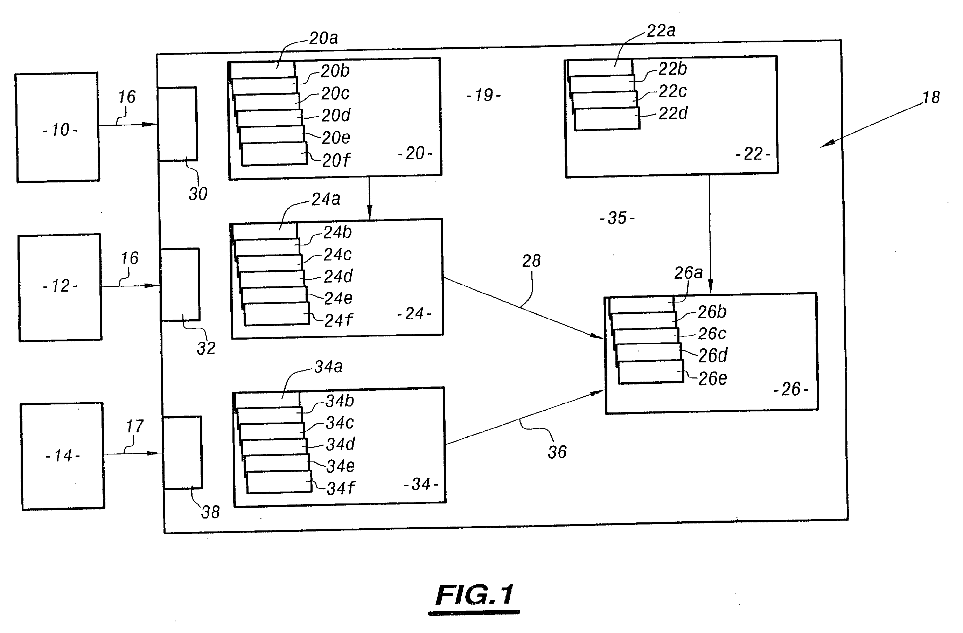

Sur la figure 1, on a représenté le schéma du système de suivi d'assurance qualité suivant l'invention.

Le système comporte des ordinateurs de type PC 10, 12, 14 formant respectivement :
- dispositif d'interface pour un administrateur,
- dispositif d'accès pour un utilisateur par programme dédié, et
- dispositif d'accès pour les utilisateurs par Intranet.

Les deux premiers ordinateurs 10, 12 sont respectivement reliés par un réseau informatique d'entreprise 16 à une unité centrale de traitement 18.

Le troisième ordinateur 14 est relié par des liaisons IP 17 à l'unité centrale 18.

Le nombre d'ordinateurs 12,14 est fonction du nombre d'utilisateurs devant avoir accès au système.

L'unité centrale de traitement 18 comporte une zone de paramétrage 19 dans laquelle se trouve une première zone de mémoire 20 de données caractéristiques d'une entreprise.

Parmi ces données, on trouve des informations relatives aux unités, aux sites, aux départements, aux équipes, aux responsables et aux utilisateurs de l'entreprise, stockées dans des régions de mémoire 20a, 20b, 20c, 20d, 20e et 20f respectives.

Dans une autre zone de mémoire 22 de la zone de paramétrage 19 sont stockées des données caractéristiques des activités sous assurance qualité.

Il s'agit d'informations concernant les processus, les lots, les origines et les causes, stockées dans des régions de mémoire 22a, 22b,22c, 22d respectives.

Les deux zones de mémoire 20 et 22 sont par ailleurs reliées respectivement à une zone 24 de gestion des non-conformités assurant la mise en oeuvre d'opérations de saisie 24a, de consultation 24b, de modification 24c, de relance 24d, de suivi 24e et d'impression 24f d'informations et à une zone 26 de gestion des actions correctives/préventives.

La zone 24 est en liaison par des liens 28 avec la zone 26 de gestion des actions correctives/préventives telles que la saisie 26a, la consultation 26b, les modifications 26c, le suivi 26d et l'impression 26e.

L'interface administrateur 10 et le dispositif d'accès utilisateur 12 sont reliés à l'unité centrale 18 par le réseau informatique 16 avec interposition de systèmes de sécurité 30,32 respectifs.

L'unité centrale 18 comporte en outre une zone 34 de gestion des audits comprenant les opérations de saisie d'audits 34a, de saisie de fiches de constat 34b, de consultation 34c, de modification 34d, de suivi 34e et d'impression 34f.

La zone de gestion des audits 34 est reliée par des liens 36 à la zone 26 de gestion des actions correctives/préventives.

Les zones 24,26 et 34 sont disposées dans une zone 35 accessible aux utilisateurs de l'unité centrale de traitement 18.

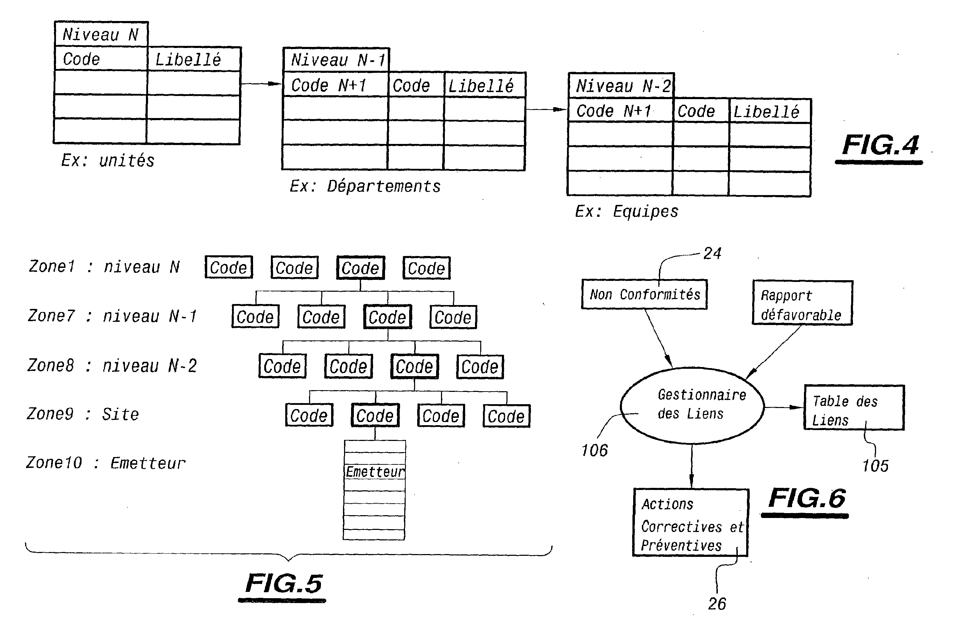

Les liaisons IP relient le PC 14 d'accès des utilisateurs par Intranet à l'unité centrale 18 par l'intermédiaire d'un système de sécurité 38 d'une manière qui sera décrite plus en détail en référence à la figure 5.

L'interface administrative 10 est accessible au responsable qualité et au gestionnaire de l'entreprise.

L'interface d'accès 12 est accessible à tous les employés de l'entreprise et aux acteurs de processus, ainsi qu'aux auditeurs extérieurs.

L'interface d'accès d'utilisateurs par intranet 14 est accessible à tout le personnel.

On dispose ainsi d'au moins trois niveaux d'habilitation.

Dans le présent mode de réalisation, on utilise pour deux interfaces d'accès le réseau informatique d'entreprise et pour une interface d'accès la liaison IP.

On peut cependant utiliser le même réseau de communications pour l'ensembles des interfaces.

Le stockage des informations dans l'application représentée à la figure 1 est issu d'un paramètrage initial construit à partir des informations suivantes :
- les caractéristiques de l'entreprise considérée,
- les caractéristiques des activités sous assurance qualité.

Les caractéristiques de l'entreprise sont accessibles dans la zone 20 de mémoire du schéma de la figure 1.

La structure de l'entreprise est initialisée à l'aide de tables successives comme représenté à la figure 4.

Pour chaque niveau de l'entreprise, on peut déclarer un ensemble de niveaux N-1 rattachés et ainsi de suite.

On donne ci-après en référence à la figure 4, un exemple de hiérarchie à trois niveaux.

### Niveau N- dénommé par exemple " Unités"

Ce niveau répertorie l'ensemble des entités de rattachement composant l'entreprise. A chaque entité est associé un code de trois caractères utilisés pour la codification des informations.

### Niveau N-1 dénommé par exemple" Départements"

Ce niveau répertorie pour chaque unité déclarée l'ensemble des sections la composant (départements ou pôles de chaque unité).

### Niveau N-2 dénommé par exemple " Equipes"

Ce niveau répertorie pour chaque Pôle/Département, l'ensemble des équipes le composant.

Il existe encore un dernier niveau qui peut être saisi dans la zone "Emetteur" d'une fiche de non-conformité.

Ces informations peuvent être complétées par la saisie des différents sites géographiques de chaque niveau N.

Les activités sous assurance qualité sont accessibles dans la zone 22.

Le périmètre des activités à intégrer dans le système de gestion informatisé est paramétré selon le même procédé que ci-dessus à l'aide de quatre éléments suivants :
- enregistrement du processus ou table du processus.
   Chaque processus de base à piloter est mémorisé dans la région 22a en association avec un code de cinq caractères maximum qui sera utilisé pour la codification des informations.
- Enumération des lots (table des lots) : dans la région 22b; ensemble des activités réalisées à l'intérieur d'un processus en relation avec les différents points d'une norme. Exemple : Rétablissement d'une défaillance SNN code SNN/R.
   L'abréviation "SNN" a pour signification Services Numériques Nationaux désignant la location de liaisons numériques placée sous Assurance Qualité.
   L'ensemble des activités liées à la fourniture de nouvelles liaisons constitue un lot Livraison. Lot SNN/L.
   L'ensemble des activités liées à la répartition des liaisons par suite de panne constitue le lot Rétablissement SNN/R.
- Causes de non-conformité (table causes) : paramétrage de la liste des principales causes dans la région 22d.
   Ces paramètres sont ensuite utilisés par le système pour effectuer des recherches.
- Origines des actions correctives/préventives (table des origines) : dans la région 22c; utilisation des différentes possibilités existantes. Exemple : défaillances répétées d'un produit, mesures, audits ....).

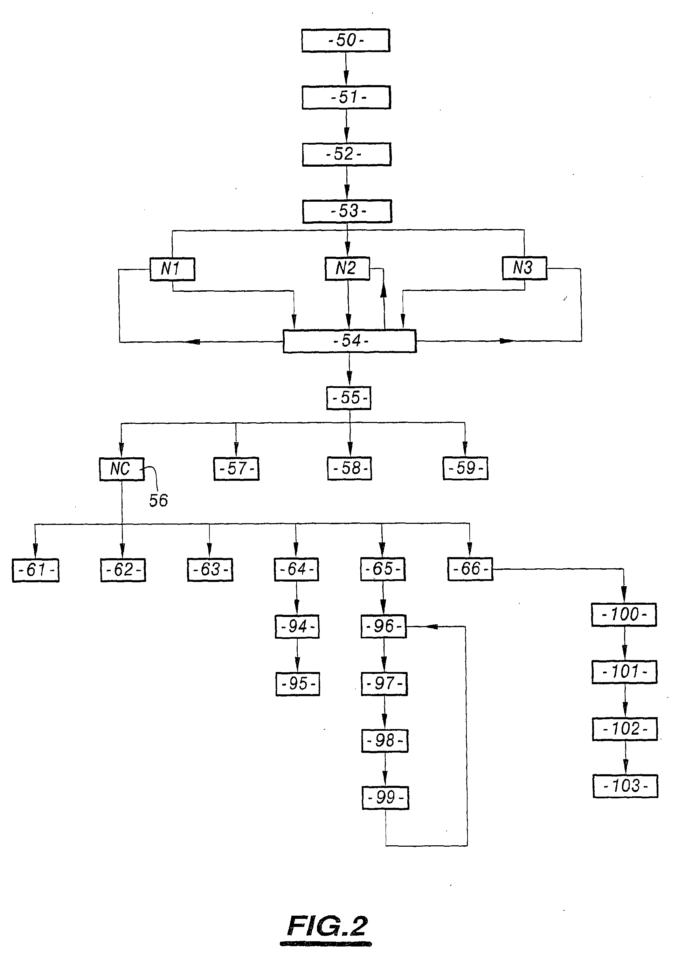

En se référant maintenant à l'organigramme de la figure 2, on voit que l'application est déclenchée à l'étape 50 par l'intermédiaire d'une ligne de commande exécutée automatiquement par un menu ou un icône.

A l'étape 51, un écran de filtrage invite l'utilisateur à saisir un nom et un mot de passe.

Ces deux entrées sont alors comparées au cours de l'étape 52 aux données enregistrées dans une table d'utilisateur afin de :
- définir le niveau d'habilitation de l'utilisateur pour l'accès aux différents menus au cours de l'étape 53.
   En fonction du nom et du mot de passe saisis, le programme répond aux contraintes d'habilitation de l'utilisateur et active ou désactive les boutons d'accès aux fonctions correspondant à trois niveaux d'habilitation N₁, N₂, N₃ par exemple.
- informer l'utilisateur des décisions techniques le concernant et déclencher au cours de l'étape 54, les mesures techniques nécessaires pour répondre aux travaux cités.

On accède ensuite au menu général au cours de l'étape 55.

En fonction du niveau d'habilitation, le menu propose ou non l'accès aux quatre modules d'application.
- Base non-conformité dans la zone 24 au cours de l'étape 56
- Base audits dans la zone 34 au cours de l'étape 57
- Base action correctives/préventives dans la zone 26 au cours de l'étape 57
- Module plans d'action de qualité au cours de l'étape 58

L'écran d'accueil de chacune des interfaces 10,12,14 comporte également un bouton de sortie de l'application matérialisé par l'étape 59.

Le système de gestion repose sur un ensemble de procédés qui sont utilisés dans différents modules du logiciel.

Dans un but de simplification, on décrit ici le procédé dans le cas d'une NON-CONFORMITE.

Le module est déclenché par la sélection du choix correspondant sur l'écran d'accueil du programme, soit sur l'interface 12, soit sur l'interface 14.

Le menu général de la base de non-conformité de la zone de mémoire 24 comporte six choix.
- Etape 61 de saisie d'une non-conformité : création d'un nouveau dossier à piloter.
- Etape 62 de consultation : accès aux informations concernant un dossier en cours.
- Etape 63 de modification : traitement d'un dossier existant.
- Etape 64 de relances : le système présente automatiquement les dossiers en cours à traiter correspondant à l'utilisateur identifié, avec calcul des délais et classement par niveaux de priorité.
- Etape 65 de suivi : système de recherche sur une partie des informations.
- Etape 66 d'édition : permet l'extraction d'informations sélectionnées pour envoi vers une imprimante ou vers un destinataire sous forme de fichier (Intranet, messagerie ou ressource partagée).

En fonction du numéro d'habilitation correspondant au nom et au mot de passe utilisés à la connexion, certains choix peuvent être verrouillés.

Exemple : choix de consultation uniquement accessible pour les utilisateurs des ordinateurs 12 et 14.

La fonction de saisie d'une non-conformité est assurée de la manière suivante.

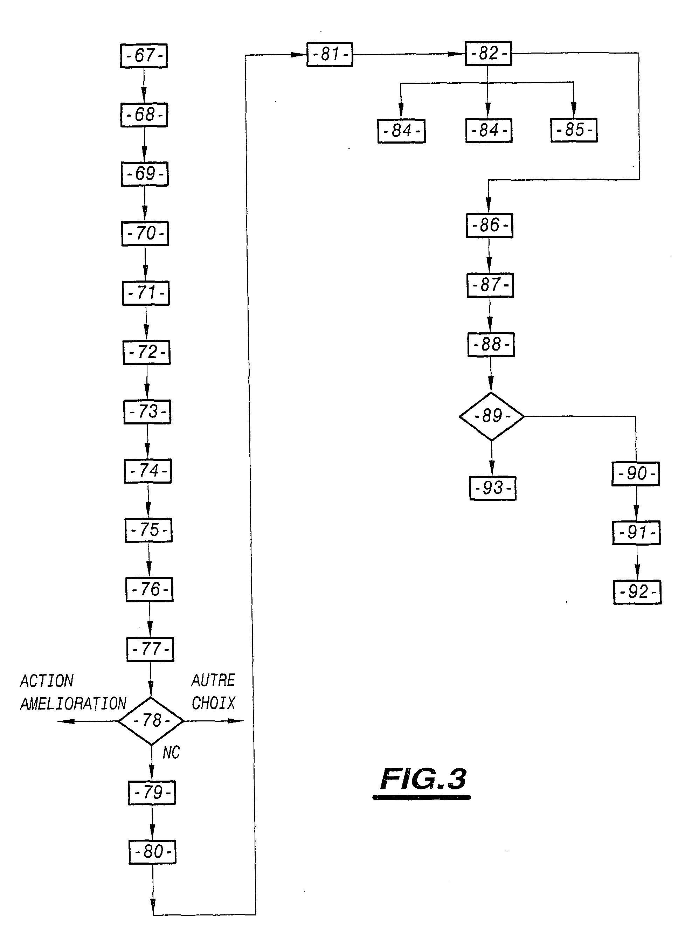

Comme décrit en référence à la figure 3, la saisie des informations s'effectue à l'aide d'un écran 67 simulant une fiche en papier normalement utilisée dans ces cas.

Les données sont ensuite mémorisées au cours d'une étape 68 dans la table de non-conformité NC 24 du système de stockage centralisé (Fig.1) et ceci, lors d'opérations de sauvegarde dont il sera question par la suite.

Comme illustré à la figure 3, le système pilote la saisie en proposant successivement lors d'une étape 69 par balayage automatique ou manuel, pour chaque zone, les valeurs issues du paramètrage initial et en éliminant ensuite les autres choix.

L'écran est divisé en zones qui vont être décrites ci-après

Zone 1 : lors d'une étape 70, le système invite l'utilisateur à choisir dans une liste le code de niveau N où une non-conformité a été constatée.

A l'activation de cette zone, au cours d'une étape 71, le système extrait de la zone de paramétrage 19 (Fig.1) une liste des valeurs possibles issue des codes de niveau N du paramétrage initial de l'entreprise. Un verrou logiciel limite les entrées aux valeurs de cette liste. Lors d'une étape 72, la valeur choisie est renvoyée dans la zone de stockage dans la table de non-conformités 24.

Zone 2 : lors d'une étape 73, saisie automatique d'un code correspondant à la période de référence en cours choisie par l'entreprise.

Un dispositif provoque la saisie automatique de cette zone par une retranscription de la date courante, fournie par l'ordinateur de l'utilisateur, dans le format retenu pour écrire la période de référence dans l'entreprise. Ce format peut être tout simplement l'année (par exemple 2000), mais aussi par exemple le mois dans l'année, (par exemple 06/00) ou la semaine dans l'année, (par exemple 23/00), etc...

Cette valeur par défaut peut être modifiée.

Zone 3 : lors d'une étape 74, l'utilisateur est invité à sélectionner dans une liste le code "Lot" correspondant à l'activité incriminée.

Le procédé est le même que pour la zone 1. Lors d'une étape 75, le système fournit la liste des valeurs possibles par extraction des codes lots initialisés dans la zone 19 de paramétrage des activités sous assurance qualité. La valeur sélectionnée au clavier ou à la souris sera lors d'une étape 76, stockée dans la table des non-conformités lors de la sauvegarde comme décrit pour la zone 4.

Zone 4 : numéro d'ordre de la non-conformité dans la période de référence : la série recommence à chaque nouvelle période choisie par l'entreprise (semaine, mois, année,...).

Le numéro d'ordre est attribué automatiquement lors de l'étape 77 par le système dès la validation de la zone 3 selon le procédé suivant.

Le programme recherche dans la base le premier numéro utilisé dans la période et l'affecte à la fiche en cours de saisie.

Une sauvegarde de l'enregistrement est immédiatement réalisée afin de répondre à un double objectif.

Eviter un conflit dans le cas où plusieurs utilisateurs sont en cours de saisie.

En effet, dès qu'une sauvegarde est effectuée, les données et donc le numéro d'ordre, sont transférées dans la base. Ainsi, le numéro qui vient d'être attribué intègre la série et ne peut pas être réaffecté.

Permettre à l'utilisateur d'interrompre sa saisie dès cet instant (il aura grâce à ce numéro la possibilité de la reprendre ultérieurement par le menu Modification).

Cette zone comporte un dispositif automatique de numérotation des enregistrements. Les renseignements sont renumérotés pour chaque nouvelle période de référence. Le procédé consiste à interroger la zone de stockage pour déterminer dans la période de référence concernée quel est le plus petit numéro d'ordre disponible. Ce numéro d'ordre est affiché dans la zone 4 et une opération de mémorisation est effectuée. Ce numéro d'ordre est affiché dans la zone 4 et une opération de mémorisation est effectuée, c'est-à-dire que l'ensemble des informations alors à l'écran de l'utilisateur est à ce moment là recopié dans la zone de stockage pour constituer un nouvel enregistrement.

La chaîne de caractères constituée par la concaténation des zones 1 à 4 ci-dessus constitue le numéro de référence complet d'une fiche, même si le couple Code Période/Numéro d'ordre est suffisant pour identifier une fiche de manière unique.

Zone 5 : Type de fiche. Au cours de l'étape 78, une case à cocher parmi trois choix : Non-Conformité, Action d'amélioration, Autres cas.

Cette zone permet de déterminer le type de l'action qui est en cours de saisie. Le système affiche les différents types prévus (3 dans le présent exemple) et un marqueur est positionné par défaut sur le premier type (non-conformité dans le présent exemple). Le cas échéant, l'utilisateur peut, grâce aux moyens habituels de pointage (clavier, souris, ...), sélectionner le type désiré. Pour des raisons de commodité, le type retenu ne sera pas stocké sous forme textuelle mais grâce à un numéro associé (ex : non-conformité = 1 ; action d'amélioration = 2 ;...). Cette valeur sera ensuite mémorisée, à l'endroit approprié pour cet enregistrement dans la zone de stockage au cours de l'étape 79, lors de l'opération de sauvegarde déclenchée par la sortie de l'écran de saisie.

Zone 6 : au cours de l'étape 80, libellé de l'action Zone de texte libre permettant de décrire le dysfonctionnement.

Cette zone de texte libre constitue une mémoire tampon de réception des informations entrées au clavier avant transfert vers l'emplacement approprié de l'enregistrement dans la zone de stockage.

Zones 7 à 10 : au cours de l'étape 81, le système invite l'utilisateur à saisir la position précise de l'émetteur de la fiche dans l'organigramme de l'entreprise selon le principe représenté à la figure 5.

Comme indiqué précédemment, cette succession de zones permet de positionner précisément l'émetteur d'un dossier à l'intérieur de la hiérarchie de l'entreprise. Le procédé est encore une fois le même que pour la zone 1, c'est-à-dire qu'un élément doit être sélectionné au clavier (souris,...) dans une liste fournie par le système, à partir d'une extraction de données issues de la zone de paramétrage 19. Une particularité existe cependant par le fait que les extractions successives s'effectuent en prenant pour critère restrictif la valeur entrée dans la zone précédente comme indiqué plus haut.

Les différentes possibilités issues du paramétrage initial sont proposées par le système en fonction du choix précédent.

Pour le nom de l'émetteur, les noms proposés sont ceux déjà saisis dans la base.

Si le nom recherché n'apparaît pas, il suffit de le taper au clavier.

Ce nouveau nom apparaîtra lors de la connexion suivante.

Ce dispositif permet d'éviter les saisies répétitives de "NOM - PRENOM ". Il permet ainsi d'homogénéiser les entrées afin de faciliter les recherches ultérieures sur critères.

La possibilité d'une saisie au clavier peut aussi être étendue aux autres zones afin d'obtenir une plus grande souplesse dans la configuration de l'application par rapport au paramétrage de départ.

Zone 11 : au cours de l'étape 82, l'utilisateur est invité à saisir la date de détection du dysfonctionnement par l'émetteur. Le système impose un format de saisie de la forme jj/mm/aaaa.

La saisie des autres champs étant basée sur les mêmes procédés, il est inutile de tous les décrire ici.

On trouvera cependant plus loin un passage consacré à la création des liens entre les données de base.

La dernière partie de l'écran comporte trois boutons permettant lors d'une étape 83 d'éditer la fiche (transfert vers une imprimante ou vers un tiers par l'intermédiaire du réseau), lors d'une étape 84 d'annuler la saisie en cours (effacement à l'écran des champs non sauvegardés) et lors d'une étape 85 de quitter la saisie/sauvegarde des données saisies dans la table NC et retour au menu précédent.

La fonction de consultation d'une non-conformité est assurée comme suit.

A l'activation du menu Consultation, lors de l'étape 86 le système présente un écran comportant deux zones.
- Une zone " Période " positionnée par défaut sur la période en cours.
   Il est possible de saisir une autre période ou d'en choisir une parmi une liste des entrées valides.
- une zone " N° " : il suffit de taper lors d'une étape 87 le numéro d'ordre de la fiche recherchée.

Après validation, le système effectue, lors d'une étape 88, une extraction sur la table NC avec les critères demandés.

Si au cours d'une étape 89 aucun enregistrement n'est trouvé, le programme recherche au cours d'une étape 90 le même numéro d'ordre dans les autres périodes et affiche au cours de l'étape 91 la liste des fiches trouvées.

S'il n'y en a pas, un message propose au cours de l'étape 92 de créer la fiche si le niveau d'habilitation le permet.

Si l'enregistrement est trouvé ou si on sélectionne un numéro de la liste constituée, le système affiche au cours de l'étape 93 les données enregistrées sous la forme d'un écran similaire à l'écran de saisie dont le titre est alors " Consultation d'une non-conformité ".

Un verrou logiciel interdit de modifier les données affichées.

La fonction Modification d'une non-conformité est assurée comme suit.

Il s'agit d'un menu disponible seulement si l'utilisateur dispose de l'habilitation suffisante, lors de l'étape 63 de l'organigramme de la figure 2 déterminée au cours du démarrage de l'application.

Il est normalement utilisé pour intervenir sur un dossier qui a été transmis pour traitement avec les coordonnées du destinataire.

La fonction Modification fonctionne exactement de la même manière que la fonction Consultation décrite plus haut.

La différence réside dans le fait qu'il est alors possible de saisir les actions qu'on déclenche, par exemple :
- retransmission de la fiche reçue vers le bon acteur (changement de coordonnées du destinataire) ;
- réalisation d'un traitement correctif ;
- qualification de la cause parmi celles paramétrées ou nouvelle saisie;
- clôture du dossier et transmission pour information aux acteurs concernés ;
- déclenchement d'une action corrective.

Dans ce cas, le système bascule en saisie dans le module de gestion des actions correctives 26 qui fonctionne de la même manière que le module de gestion des non-conformités 24.

Le logiciel propose par ailleurs de clore le dossier NC des non-conformités.

La fonction Relance des non-conformités est déclenchée par l'étape 64 de la figure 2 et est réalisée comme suit.

Comme on l'a vu lors de la description du démarrage de l'application, les utilisateurs sont automatiquement avertis des instances qui les concernent au démarrage de l'application. Il s'agit en premier lieu des fiches qui leur ont été transmises et qu'ils n'ont pas encore traitées. Le principe de la relance est de rappeler au bon souvenir des destinataires tous les dossiers qu'ils ont en attente depuis un certain temps sans être intervenus dessus. Le délai de relance peut être paramétré.

Lors de l'étape 94, le système affiche alors pour l'utilisateur connecté toutes les fiches qu'il a transmises et qui dépassent le délai choisi. On peut alors lors de l'étape 95 effectuer une relance globale ou fiche par fiche, manuelle ou automatique. Cela a pour effet de réactiver la notion de non-acquittement pour les fiches sélectionnées de sorte qu'elles réapparaissent dans la liste automatique de démarrage de l'application chez les destinataires.

Cette relance peut être complétée par un message émis via la messagerie afin d'atteindre les destinataires indépendamment de l'application. Le cas échéant, les relances successives d'un même dossier sont numérotées et consultables par un historique.

La fonction relance consiste à annuler l'acquittement de fiches qui n'ont pas été traitées dans un délai normal. Le dispositif technique permettant d'obtenir ce résultat est le suivant :

Lors de sa création, chaque dossier est déclaré non-acquitté par le système. Cette information est enregistrée avec les autres données saisies, dans la zone de stockage correspondante. Comme on l'a vu auparavant, chaque dossier comporte également des informations précises sur son émetteur et son destinataire.

Lorsqu'un utilisateur se connecte, il doit s'identifier par un nom et un mot de passe. Le système recherche alors dans la zone de stockage s'il existe des dossiers qui lui sont destinés et ne sont pas acquittés. Il lui en renvoie alors la liste à l'écran, résumés en quelques champs. Sur sélection d'un enregistrement au clavier (souris, ...), le système extrait l'ensemble des informations en mémoire et affiche le dossier complet à l'écran, ce qui permet de prendre connaissance des instances en "surfant" de dossier en dossier. Dès qu'un dossier est visualisé, le système transfère en zone de stockage l'information "acquitté" dans l'emplacement approprié de l'enregistrement.

L'exécution de la fonction de relance s'effectue en plusieurs étapes :
- mémorisation de la cible : le système présente un écran affichant :
   - les coordonnées courantes de l'émetteur connecté (extraction de la table utilisateurs selon le nom et le mot de passe saisis lors de la connexion, modifiables),
   - le délai de relance (valeur par défaut 20j, modifiable),
   - les coordonnées destinataire visé (vides par défaut, permettent de cibler une relance grâce à une saisie de zones selon le même dispositif que celui présenté en mode saisie).

   L'utilisateur doit valider cet écran.
- Recherche des dossiers concernés : le système effectue dans la zone de stockage une extraction des enregistrements répondant aux critères de la cible définie ci-dessus (émetteur = émetteur connecté, destinataire = destinataire visé (si précisé), dossier non soldé, date de transmission à date du jour moins délai de relance), et en renvoie une liste à l'écran, résumée en quelques champs.
- Consultation et/ou relance des dossiers extraits : la liste constituée ci-dessus permet de "naviguer" de dossier en dossier selon un procédé déjà décrit auparavant. Elle permet également par simple click (ou tout autre moyen disponible de pointage), de sélectionner le ou les dossiers que l'on veut relancer. Lorsqu'une relance est déclenchée par le choix du menu prévu à cet effet, le système transfère dans la zone de stockage l'information "non-acquitté" dans l'emplacement approprié de chaque enregistrement sélectionné.
- L'événement de relance est mémorisé dans une table spéciale de la zone de stockage qui enregistre :
   - le numéro de référence complet du dossier,
   - le code-numéro de la relance (voir ci-dessous),
   - la date du jour.

Lors de sa prochaine connexion, chaque utilisateur de la cible verra son ou ses dossiers relancés s'afficher automatiquement grâce au procédé décrit plus haut.

Système de numérotation des relances : chaque dossier dispose en zone de stockage d'un emplacement mémoire permettant de stocker une information du type "acquitté"/non-acquitté". Cette information est codée sur deux caractères selon le procédé suivant :
- 1^{er} caractère = numéro d'ordre de la relance (0 à la création)
- 2^{ème} caractère = acquittement (0 = non acquit, 1 = acquitté)

Consultation des relances : à la lecture d'un dossier relancé, le système vient lire le numéro de la relance et le titre initial "consultation de ..." est remplacé par "1^{ère} relance de ...", puis " 2^{ème} relance de ...", etc.

Une commande permet de consulter l'historique des relances. Elle provoque l'extraction des évènements relance, mémorisés dans l'emplacement approprié de la zone de stockage et correspondant au dossier en cours, et l'affichage du résultat à l'écran de l'utilisateur sous forme de tableau.

L'ouverture par le destinataire d'un dossier relancé provoque la remise à 1 de son caractère d'acquittement, avec ou sans contrôle manuel.

La fonction suivi déclenchée par l'étape 65 de la figure 2 se déroule de la façon suivante.

Pour l'efficacité du système de gestion, les différents évènements techniques présents dans le dispositif doivent pouvoir être retrouvés, suivis, regroupés, classés par thèmes ou selon des critères communs. A cet effet, un moteur de recherche 96 est disponible pour chaque module de l'application. Il fonctionne selon deux modes possibles :
- Recherche par critères simples :
   Seuls les principaux paramètres utilisables pour effectuer une recherche sont présentés sur un écran simplifié. Il s'agit de critères de base issus du paramétrage initial de l'application, par exemple pour les non-conformités.
      - année
      - niveau N
      - processus
      - lot
      - cause
- Recherche par critères détaillés :
   Le système présente un écran semblable à une fiche de saisie, et qui fonctionne comme un masque de filtrage : ce qui est défini sur le masque devra être présent sur les fiches pour qu'elles soient retenues lors de la sélection.
   Chaque zone de l'écran dispose d'une liste des valeurs possibles pour cette zone. Pour l'efficacité des recherches, les listes sont directement alimentées par les données présentes dans la base, ce qui évite les échecs dus à des différences d'orthographe.

Après avoir validé sa recherche au cours de l'étape 97 en critères simples ou critères détaillés, l'utilisateur obtient au cours de l'étape 98 la liste des enregistrements sélectionnés et résumés en quelques champs. Il peut alors au cours de l'étape 99 soit éditer le résultat (imprimante, mail, ...) soit s'en servir pour parcourir les fiches correspondantes : la sélection d'une fiche dans la liste déclenche l'ouverture du dossier correspondant en mode Modification. Après fermeture, on revient sur le tableau et ainsi de suite.

Il s'agit donc d'un système qui permet :
- d'effectuer une sélection de dossiers dans la base selon des critères plus ou moins complexes,
- de "surfer" sur ces dossiers par l'intermédiaire de la liste constituée afin de les consulter et éventuellement d'effectuer des modification.

Le dispositif technique mis en oeuvre pour réaliser le moteur de recherche au coeur de cette fonction repose sur deux éléments principaux :

Un système de collecte des critères : ce sont les écrans "critères simples" et "critères détaillés". Le principe est de proposer pour chaque paramètre pouvant être défini des valeurs réelles issues d'une extraction directe dans la zone de stockage. Il s'agit donc d'un procédé d'échanges entre la zone de stockage et l'utilisateur, avec pour chaque champ à renseigner :
- Affichage du système des valeurs possibles sur l'écran utilisateur, par extraction des différentes valeurs en mémoire dans la zone de stockage.
- Sélection par l'utilisateur de la valeur recherchée dans la liste et mémorisation provisoire de cette valeur dans la zone correspondante.

Il est évidemment possible de laisser des champs vierges, ce qui correspond à l'absence de critère sur les données correspondantes.

Un système d'extraction des enregistrements répondant aux critères : la technique utilisée est la technique courante de manipulation des systèmes d'enregistrement des données (par exemple application d'une requête sélection à un SGBDR), avec l'adaptation particulière suivante :
- Le champ de sélection du système d'extraction est positionné par défaut sur l'ensemble des données (absence de critères).
- Un dispositif scrute l'ensemble des zones présentes sur l'écran de critères et vérifie la présence d'une saisie éventuelle.
- Pour chaque zone saisie, le dispositif complète la loi d'extraction afin de tenir compte du critère spécifié.
- A la fin de la phase de contrôle de l'écran des critères, on dispose ainsi d'une loi d'extraction appropriée à la recherche demandée. La suite de l'extraction se déroule de manière classique.

La fonction Edition déclenchée à l'étape 66 de l'organigramme de la figure 1, va maintenant être décrite.

Les fonctions d'éditions présentes dans chaque module se déroulent en deux étapes :
- présélection à l'étape 100 des informations concernées : elle s'effectue grâce au moteur de recherche décrit ci-dessus.
- choix de l'impression : à l'étape 101 chaque module dispose d'un jeu de formats d'impression, listings ou statistiques. Les tableaux statistiques disposent des fonctions de calcul nécessaires à leur élaboration. Ils peuvent être complétés par une présentation sous forme de diagrammes.

Lors de l'étape 102, le format demandé est alors combiné à la sélection obtenue pour produire le résultat escompté. Ce résultat est présenté lors de l'étape 103 sous forme d'aperçu écran pour pouvoir être consulté et envoyé soit vers une imprimante, soit vers un destinataire, par exemple sous forme de fichier joint à un e-mail.

Pour permettre une aide à la décision appropriée et efficace, le programme SIGBAQ ou Système Informatisé de Gestion de la Boucle d'Amélioration de la Qualité, permet de mettre en relation les différents dysfonctionnements relevés et les décisions techniques qui s'imposent pour les traiter ou les éviter.

Le schéma de fonctionnement de ce système de liens est représenté à la figure 6.

Les relations qui existent entre les actions déclenchées et leurs origines sont mémorisées dans une zone 105 prévue à cet effet ici les tables des liens. Elles sont crées ou supprimées directement depuis les fiches à relier grâce à l'appel du gestionnaire 106, ceci depuis n'importe quel module. Une fois établis, les liens apparaissent en clair dans la zone correspondante des fiches. Bien entendu, il est possible de créer des liens croisés ou multiples.

Le fonctionnement normal est l'enchaînement dysfonctionnement constaté/décision prise. Dans ce cas, le lien est créé automatiquement. Mais il est également possible de mettre en relation ultérieurement des évènements saisis indépendamment les uns des autres.

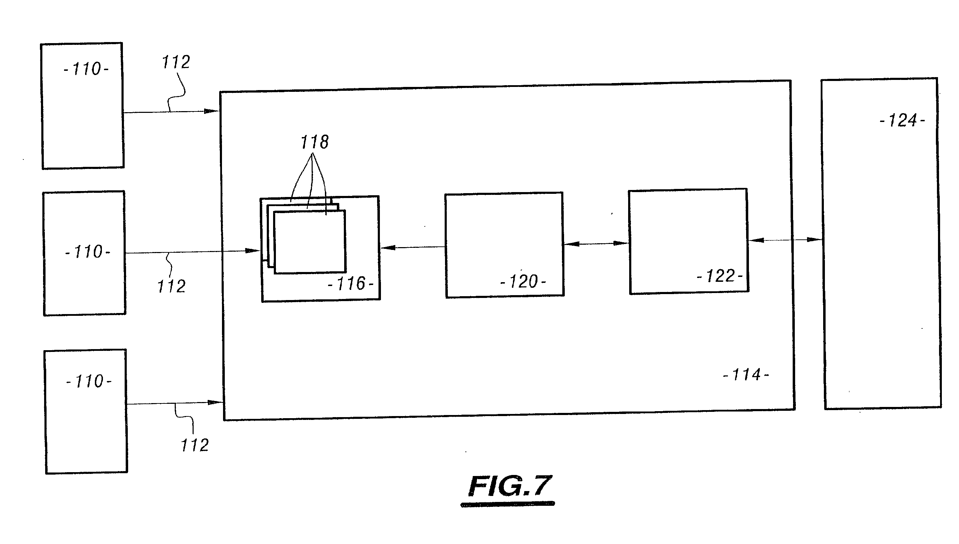

Comme représenté à la figure 7, l'interface Intranet permet de connecter au système sans installation logicielle autre qu'un simple navigateur disposant d'un accès au réseau IP de l'entreprise.

Le schéma de l'interface Intranet comprend des PC formant interface d'accès de l'utilisateur par l'intermédiaire de son navigateur. Ces PC 110 analogues au PC 14 du système de la figure 1, sont connectés chacun par une liaison Intranet 112 à une interface Intranet 114 comprenant une interface utilisateurs 116 qui contient des pages HTML 118.

L'interface utilisateur 116 est reliée à des scripts 120 d'élaboration des pages liées aux données, ces scripts 120 étant à leur tour reliés à des scripts 122 de gestion des connexions aux données.

L'interface Intranet 114 est enfin reliée à une zone 124 de stockage des données SIGBAQ qui se trouve dans l'unité centrale de traitement 18.

L'adaptation particulière pour le fonctionnement par Intranet constitue une application Web qui se résume en trois parties comme représenté à la figure 7 :
- Un programme de gestion des connexions au dispositif de stockage des données.
   Celui-ci permet à l'interface Intranet d'accéder au coeur même de la zone de stockage du système.
- Un programme de gestion des pages HTML d'accès aux données.
   Les données reçues ou à transmettre à la zone de stockage doivent être encapsulées pour pouvoir être accessibles par un navigateur (consultation, saisie).
- Une interface utilisateurs.
   Elle offre les menus et écrans successifs grâce à un répertoire de pages HTLM et à un système de navigation et de scripts (les écrans liés aux données étant élaborés par le programme de gestion de pages cité précédemment).

## Revendications

1. Système de suivi d'assurance qualité d'une entreprise, **caractérisé en ce qu'**il comporte un dispositif d'enregistrement de données relatives à une entreprise permettant d'établir des liens entre lesdites données, comprenant un dispositif (18) de stockage d'informations et de mise en commun de celles-ci, des postes d'utilisateurs (10,12,14;110) pouvant être mis en communication avec le dispositif de stockage (18) au moyen de réseaux informatiques (16,17;112), des moyens de détermination d'écarts entre lesdites données et des normes en vigueur et des moyens (26) de déclenchement d'actions correctives en réponse à l'existence et à la possibilité de non-conformités.

2. Système suivant la revendication 1, **caractérisé en ce que** le dispositif d'enregistrement de données comprend une unité centrale de traitement (18) comportant une zone de paramétrage (19) reliée à une interface d'administrateur (10) ayant un premier niveau d'habilitation, ladite zone de paramétrage (19) contenant une première zone de mémoire (20) de données caractéristiques d'une entreprise et une seconde zone de mémoire (22) de données caractéristiques des activités sous assurance qualité de ladite entreprise, ladite unité centrale comprenant en outre une zone (35) accessible aux utilisateurs reliée à des interfaces (12,14) ayant au moins un second niveau d'habilitation inférieur au premier niveau d'habilitation, d'accès pour les utilisateurs et contenant au moins une zone (24) de gestion des non-conformités reliée à la zone (20) de stockage de données caractéristiques de l'entreprise, une zone (26) de gestion des actions correctives/préventives reliée à la zone (22) de stockage de données caractéristiques des activités sous assurance qualité, ladite zone (24) de gestion des non-conformités étant reliée à la zone (26) de gestion des actions correctives/préventives par des premiers liens (28).

3. Système suivant la revendication 2, **caractérisé en ce que** la zone (20) de stockage de données caractéristiques de l'entreprise comprend des régions de mémoire (20a,20b,20c,20d,20e, 20f) pour le stockage d'informations relatives aux unités, aux sites, aux départements, aux équipes, aux responsables et aux utilisateurs de l'entreprise respectivement.

4. Système suivant l'une des revendications 2 et 3, **caractérisé en ce que** la zone (22) de stockage de données caractéristiques des activités sous assurance qualité comprend des régions de mémoire (22a,22b,22c,22d) pour des informations concernant respectivement les processus, les lots, les origines et les causes des non-conformités.

5. Système suivant l'une des revendications 2 à 4, **caractérisé en ce que** la zone (24) de gestion des non-conformités comporte des régions (24a,24b,24c,24d,24e,24f) de mise en oeuvre d'opérations de saisie, de consultation, de modification, de relance, de suivi et d'impression d'informations.

6. Système suivant l'une des revendications 2 à 5, **caractérisé en ce que** la zone (26) de gestion des actions correctives/préventives, comprend des régions respectives (26a,26b,26c,26d,26e) de saisie, de consultation, de modification, de suivi et d'impression.

7. Système suivant l'une des revendications 2 à 6, **caractérisé en ce que** la zone (35) accessible aux utilisateurs comporte en outre une zone (24) de gestion des audits reliée par des liens (36) à la zone (26) de gestion des actions correctives/préventives.

8. Système suivant la revendication 7,**caractérisé en ce que** ladite zone (34) de gestion des audits comprend des régions (34a,34b,34c,34d,34e,34f) respectivès de mise en oeuvre d'opérations de saisie d'audits, de saisie de fiches de constat, de consultation, de modification, de suivi et d'impression.

9. Système suivant l'une des revendications 1 à 8, **caractérisé en ce que** le dispositif (18) de stockage d'informations est une unité centrale de traitement et **en ce que** les postes d'utilisateurs (10,12,14) sont des ordinateurs de type PC dont au moins certains (10,12) sont reliés à l'unité centrale par des liaisons informatiques d'entreprise (16).

10. Système suivant la revendication 9, **caractérisé en ce qu'**au moins certains (14;110) desdits postes utilisateurs sont reliés à l'unité centrale par une liaison Intranet (17; 112).

11. Système suivant la revendication 10, **caractérisé en ce que** les postes d'utilisateurs (110) sont connectés chacun par une liaison Intranet (112) à une interface Intranet (114) reliée à son tour à une zone (124) de stockage des données du système informatique de gestion de la boucle d'amélioration de la qualité se trouvant dans l'unité centrale de traitement (18).

12. Système suivant la revendication 1, **caractérisé en ce que** l'interface Intranet (114) comprend une interface utilisateurs (116) qui contient des pages HTML (118) et qui est reliée à son tour à des premiers scripts (120) d'élaboration de pages liées aux données, lesdits premiers scripts (120) étant à leur tour reliés à des seconds scripts (122) de gestion des connexions aux données.

13. Système suivant l'une des revendications 1 à 12, **caractérisé en ce que** la structure d'une entreprise est initialisée à l'aide de tables correspondant à différents niveaux (N,N-1,N-2) de hiérarchie dans l'entreprise (Fig.4).
